# EUROPÄISCHE PATENTSCHRIFT

(11) **EP 2 264 423 B1**
(45) Veröffentlichungstag und Bekanntmachung des Hinweises auf die Patenterteilung: **28.01.2015**
(21) Anmeldenummer: 09179412.3
(22) Anmeldetag: 16.12.2009
(51) Int. Cl.: G01N 15/06, G01N 1/22

(54) **Vorrichtung zur Bestimmung der Konzentration von Feststoffpartikeln**
Device for determining the concentration of solid particles
Dispositif destiné à la détermination de la concentration de particules solides

(30) Priorität: 13.01.2009 AT 1409 U
(43) Veröffentlichungstag der Anmeldung: 22.12.2010
(73) Patentinhaber: AVL List GmbH, 8020 Graz (AT)
(72) Erfinder: Knopf, Franz, 8051 Graz (AT); Pongratz, Helmut, 8045Graz (AT); Bergmann, Alexander, 8052 Graz (AT)
(74) Vertreter: Patentanwälte Pinter & Weiss OG

(56) Entgegenhaltungen:
- EP-A1- 1 022 130
- EP-A1- 1 367 379
- GB-A- 2 445 272

## Beschreibung

Die Erfindung betrifft eine Vorrichtung zur Bestimmung der Konzentration von Feststoffpartikeln in einem partikelbeladenen Gasstrom, mit einem einen aus dem Gasstrom abgezweigten Probenstrom mit einem im wesentlichen partikelfreien Verdünnungsgas mischenden Vorverdünner, einem im verdünnten Probenstrom nachgeschalteten beheizten Verdampfer, einem dem Verdampfer nachgeschalteten, den Probenstrom mit weiterem im wesentlichen partikelfreien Verdünnungsgas mischenden Sekundärverdünner und einem dem Sekundärverdünner nachgeschalteten Partikelzähler.

Vorrichtungen der genannten Art und die damit durchgeführten Verfahren sind insbesonders im Zusammenhang mit der Charakterisierung und Messung von Aerosolen im Abgas von Verbrennungsmotoren bekannt und zumindest zum Teil auch bereits Gegenstand sowohl von nationalen als auch von regionalen und internationalen Prüfvorschriften, Normen und dgl. Eine relativ detaillierte Beschreibung einer Vorrichtung der genannten Art ist beispielsweise in den "Amendments to UNECE regulations/regulation No. 83/Appendix 5" (United Nations, Economical and Social Council, Economic Commision for Europe; Jänner 2008) enthalten. Weiters gibt es auch bereits einige kommerziell erhältliche Vorrichtungen die diese vorgeschlagenen Elemente enthalten und damit entsprechende Messungen ermöglichen.

Abgase von Verbrennungsmotoren und insbesondere solche von Dieselmotoren enthalten bekanntermaßen nicht nur klassische Aerosole (im Sinne von flüchtigen Schwebeteilchen), sondern ein Gemisch aus festen und flüchtigen Schwebeteilchen in einem Trägergas, wobei die Anlass für die entsprechenden Untersuchungen gebende Schädlichkeit der Abgase fast ausschließlich von den Feststoffpartikeln herrührt. Vorrichtungen der hier interessierenden und eingangs genannten Art zielen daher darauf ab, die für die Schädlichkeitsdefinition nicht relevanten flüchtigen Partikel vor der endgültigen Messung zu eliminieren, wozu der Probenstrom nacheinander verdünnt, aufgeheizt und nochmals verdünnt wird. Im Vorverdünner, der beispielsweise gemäß AT 9.603 U ausgebildet sein kann, wird die Konzentration sowohl von Feststoffpartikeln als auch von flüchtigen Aerosolen im Probenstrom verringert. Im nachgeschalteten beheizten Verdampfer werden die flüchtigen Substanzen in die Dampfphase übergeführt, wobei durch Einstellen einer entsprechenden Vorverdünnung die Konzentration der flüchtigen Aerosole so weit vermindert werden kann, dass nach dem Verdampfer der Dampfdruck dieser Substanzen so niedrig ist, dass sie auch bei nachfolgender Abkühlung nicht mehr auskondensieren, womit der nachträglich wieder abzukühlende Probenstrom dann nur noch die zu zählenden Feststoffpartikel enthält.

Um die Messung bzw. Zählung der interessierenden Feststoffpartikel in einem weiten Bereich der tatsächlichen Partikelkonzentration im partikelbeladenen Gasstrom zu ermöglichen müssen insbesonders das Zusammenspiel der Verdünnungsrate im Vorverdünner und Sekundärverdünner sowie die verschiedenen Stadien der Aufheizung und Abkühlung des Probenstroms genau aufeinander abstimmbar bzw. regelbar sein, was die konkreten Ausführungen kommerzieller Systeme, die den eingangs angesprochenen Empfehlungen der UNECE regulations entsprechen, sehr komplex macht, womit sie beispielsweise für Prüfstände von lokalen Straßenverkehrsämtern, Autowerkstätten und dgl. kaum zur Anwendung kommen können.

Aufgabe der vorliegenden Erfindung ist es, eine Vorrichtung der eingangs angesprochenen Art so auszugestalten bzw. zu verbessern, dass auch für weite Messbereiche eine einfache Anordnung und Regelung möglich wird.

Diese Aufgabe wird gemäß der vorliegenden Erfindung bei einer Vorrichtung der eingangs genannten Art dadurch gelöst, dass der Sekundärverdünner als "Porous Tube Diluter" ausgebildet und zwischen Ausgang des Verdampfers und einer Stabilisierungskammer, aus der der Probenstrom für den Partikelzähler abgezweigt wird, angeordnet ist. Ein derartiger "Porous Tube Diluter" weist auf zumindest einem Teil der hindurchführenden Probenleitung Umfangsöffnungen auf, durch die von Außen her unter zumindest leichtem Überdruck zugeführtes, im wesentlichen partikelfreies Verdünnungsgas in die Probenleitung einströmen und sich dort mit dem Probenstrom auf sehr einfach einzustellende bzw. leicht zu regulierende Weise mischen kann. Er erfolgt dadurch auch unmittelbar die erwünschte Abkühlung des Probenstroms, wobei auf zuvor beschriebene Weise aber sichergestellt ist, dass die beim vorherigen Aufheizen verdampften flüchtigen Aerosolpartikel nicht wieder kondensieren können. Durch die regelbare Verdünnung des Sekundärverdünners kann zusammen mit der regelbaren Verdünnung des Vorverdünners und den Aufheiz- bzw. Abkühltemperaturen des Probenstroms ein sehr weiter Bereich an letztendlich im nachgeschlteten Partikelzähler zu messenden Konzentrationen der interessierenden Feststoffpartikel abgedeckt werden.

Der Sekundärverdünner ist in bevorzugter Ausgestaltung der Erfindung über eine thermisch isolierte Probenleitung mit dem beheizten Verdampfer verbunden, was sicherstellt, dass der Wärmetransfer vom Probengasstrom zur Rohrwand unterbunden und somit thermophoretische Ablagerung der Aerosolteilchen vermieden werden kann.

Der als "Porous Tube Diluter" ausgebildete Sekundärverdünner weist bevorzugt eine große Anzahl, vorzugsweise > 1000, von Umfangsöffnungen, vorzugsweise mit einem Durchmesser < 0,15 mm, in der Probenleitung auf, denen von einem die Probenleitung in diesem Bereich abgedichtet umgebenden Mantelraum aus das weitere Verdünnungsgas als vorzugsweise thermostatisierbarer kalter Verdünnungsstrom zuführbar ist. Es ergibt sich damit eine kontrolliert über einen relativ großen Umfangsbereich und sehr viele Mischstellen stattfindende Sekundärverdünnung und Abkühlung des Probenstroms.

Die Umfangsöffnungen des Sekundärverdünners können in weiterer Ausgestaltung der Erfindung auch konisch mit von außen nach innen abnehmendem Querschnitt ausgebildet und weiters auch in radialer und/oder axialer Richtung abweichend von einer Normalen auf die jeweilige Leitungsoberfläche ausgerichtet sein, was weitere vorteilhafte Einflussmöglichkeiten auf die Mischung und damit Verdünnung und Abkühlung ergibt.

Die dem Sekundärverdünner nachgeschaltete Stabilisierungskammer ist in bevorzugter Ausgestaltung der Erfindung mit gegenüber der Probenleitung im Sekundärverdünner wesentlich größerem Querschnitt ausgebildet und weist zusätzlich zu einer Abströmöffnung zumindest einen Entnahmeanschluss für den Partikelzähler auf. Durch die am Übergang in die Stabilisierungskammer damit vorliegende starke Änderung der Reynolds-Zahl kommt es zu einer homogenen Vermischung mit dem im Sekundärverdünner zugeführten Verdünnungsgas, womit der Stabilisierungskammer dann repräsentative Proben entnommen werden können, die im Partikelzähler (beispielsweise einem bekannten Kondensationskernzähler) zur Bestimmung der Konzentration der verbliebenen Feststoffpartikel gemessen werden.

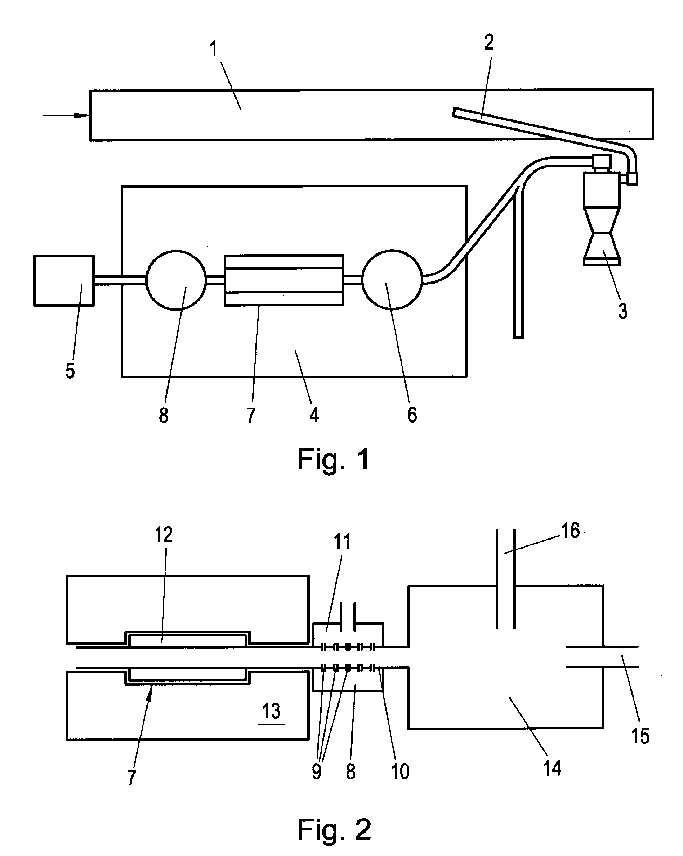

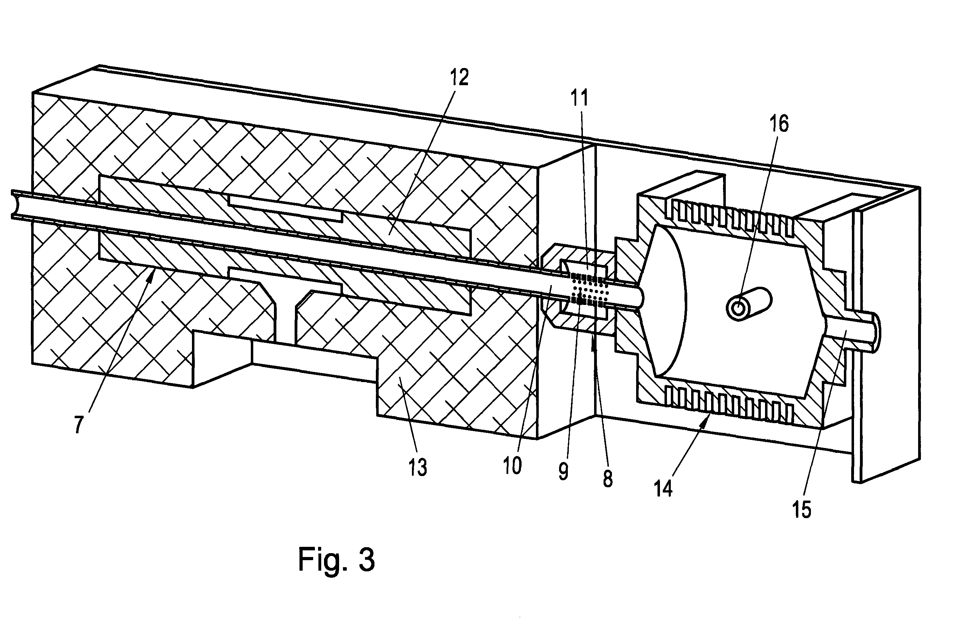

Die Erfindung wird im folgenden anhand der in der Zeichnung schematisch dargestellten Ausführungsbeispiele näher erläutert. Fig. 1 zeigt dabei die schematische Darstellung eines gemäß UNECE Regulation No. 83 - Appendix 5 empfohlenen "Particle Sampling Systems" mit den wesentlichen Komponenten der erfindungsgemäßen Vorrichtung, Fig. 2 zeigt in schematischer Ansicht Verdampfer, Sekundärverdünner und Stabilisierungskammer nach der vorliegenden Erfindung und Fig. 3 die Teilanordnung nach Fig. 2 als aufgeschnittene konkrete Vorrichtung.

Die Vorrichtung nach Fig. 1 dient zur Bestimmung der Konzentration von Feststoffpartikeln in einem partikelbeladenen Gasstrom, der hier auf nicht näher dargestellte Weise vom Lieferanten des Gasstromes - beispielsweise einer Diesel-Brennkraftmaschine - einem Verdünnungstunnel (CVS-Tunnel) 1 zugeführt und dort mit gefilterter und hinsichtlich Temperatur und Feuchtigkeit regulierter Verdünnungsluft gemischt und stabilisiert wird. Aus dem Tunnel 1 gelangt ein mittels einer Sonde 2 abgezweigter Probenstrom über einen Vorklassifizierer 3, der eine Vorauswahl hinsichtlich der Partikelgröße darstellt, zu einer Einheit 4, die zur Aufgabe hat, die flüchtigen Aerosole aus dem Probenstrom zu entfernen bzw. in die Dampfphase überzuführen, sodass ein nachgeschalteter Partikelzähler 5 nur mehr die eigentlich interessierenden Feststoffpartikel bzw. deren Konzentration im Probenstrom misst.

In der Einheit 4 gelangt der über den Vorklassifizierer 4 zugeführte Probenstrom vorerst in einen Vorverdünner 6, in dem auf hier nicht dargestellte Weise im wesentlichen partikelfreies Verdünnungsgas regulierbar zugemischt wird. Dieser Vorverdünner kann beispielsweise als Rotationsverdünner, wie etwa in AT 9.603 U beschrieben, ausgebildet sein. Dem Vorverdünner 6 ist ein beheizter Verdampfer 7 nachgeschaltet, der eine Aufheizung des verdünnten Probenstroms auf etwa 350°C - 400°C erlaubt. Dem Verdampfer 7 nachgeschaltet ist ein Sekundärverdünner 8, mittels dem eine weitere Verdünnung und Abkühlung des zufolge der Vorverdünnung und Aufheizung nun von flüchtigen Aerosolen freien Probenstroms erfolgt, der dann zum Partikelzähler 5 geleitet wird.

Gemäß Fig. 2 ist erfindungsgemäß der Sekundärverdünner 8 als "Porous Tube Diluter" ausgebildet und weist eine große Anzahl (vorzugsweise mehr als 1000) von Umfangsöffnungen 9 in der Probenleitung 10 auf, von denen hier der Übersichtlichkeit halber nur einige vergrößert dargestellt sind. Diesen Umfangsöffnungen 9 wird von einem die Probenleitung 10 in diesem Bereich abgedichtet umgebenden Mantelraum 11 aus das weitere Verdünnungsgas als vorzugsweise termostatisierbarer kalter Verdünnungsstrom zugeführt, was eine intensive Vermischung und Abkühlung des im Bereich des beheizten Verdampfers 7 aufgeheizten Probenstroms sicherstellt. Der Sekundärverdünner 8 ist über ein möglichst kurzes Stück der thermisch isolierten Probenleitung 10 mit dem beheizten Verdampfer 7 verbunden, sodass in diesem Bereich Ablagerungen der Aerosolteilchen vermieden werden können. Die Heizungsanordnung des Verdampfers ist mit 12 und die Isolierung mit 13 bezeichnet.

Die Umfangsöffnungen 9 an der Probenleitung 10 im Sekundärverdünner 8 weisen vorzugsweise einen Durchmesser von < 0,15 mm auf und können auch konisch mit von außen nach innen abnehmendem Querschnitt ausgebildet sein - weiters ist durch eine von einer Normalen auf die jeweilige Leitungsoberfläche abweichende Ausrichtung dieser Umfangsöffnungen auch eine weitere Einflussnahme auf das Einströmverhalten des weiteren Verdünnungsgases und damit auf die Durchmischung und Abkühlung des Gasstroms möglich.

Die nachgeschaltete Stabilisierungskammer 14 ist mit einem gegenüber der Probenleitung 10 im Sekundärverdünner 8 wesentlich größeren Querschnitt ausgebildet, wodurch es durch eine starke Änderung der Reynolds-Zahl am Übergang zu einer weiteren homogenen Vermischung des Probenstroms mit der Verdünnungsluft kommt. Zusätzlich zu einer Ausströmöffnung 15 ist seitlich ein Entnahmeanschluss 16 vorgesehen, über den repräsentative Proben für ein oder auch mehrere Messgeräte, insbesonders Partikelzähler, entnommen werden können.

Bei der in Fig. 3 geschnitten dargestellten konkreten Ausführung sind der Fig. 2 funktionell entsprechende Elemente mit gleichen Bezugszahlen versehen. Die Beschreibung zu Fig. 2 gilt unverändert auch für Fig. 3.

## Patentansprüche

1. Vorrichtung zur Bestimmung der Konzentration von Feststoffpartikeln in einem partikelbeladenen Gasstrom, mit einem, einen aus dem Gasstrom abgezweigten Probenstrom mit einem im wesentlichen partikelfreien Verdünnungsgas mischenden Vorverdünner (6), einem im verdünnten Probenstrom nachgeschalteten beheizten Verdampfer (7), einem dem Verdampfer (7) nachgeschalteten, den Probenstrom mit weiterem im wesentlichen partikelfreien Verdünnungsgas mischenden Sekundärverdünner (8) und einem dem Sekundärverdünner (8) nachgeschalteten Partikelzähler (5), **dadurch gekennzeichnet, dass** der Sekundärverdünner (8) als "Porous Tube Diluter" ausgebildet und zwischen Ausgang des Verdampfers (7) und einer Stabilisierungskammer (14), aus der der Probenstrom für den Partikelzähler (5) abgezweigt wird, angeordnet ist.

2. Vorrichtung nach Anspruch 1, **dadurch gekennzeichnet, dass** der Sekundärverdünner (8) über eine thermisch isolierte Probenleitung (10) mit dem beheizten Verdampfer (7) verbunden ist.

3. Vorrichtung nach Anspruch 1 oder 2, **dadurch gekennzeichnet, dass** der als "Porous Tube Diluter" ausgebildete Sekundärverdünner (8) eine große Anzahl, vorzugsweise > 1000, von Umfangsöffnungen (9), vorzugsweise mit einem Durchmesser von < 0,15 mm, in der Probenleitung (10) aufweist, denen von einem die Probenleitung (10) in diesen Bereich abgedichtet umgebenden Mantelraum (11) aus das weitere Verdünnungsgas als vorzugsweise thermostatisierbarer kalter Verdünnungsstrom zuführbar ist.

4. Vorrichtung nach Anspruch 3, **dadurch gekennzeichnet, dass** die Umfangsöffnungen (9) konisch mit von außen nach innen abnehmendem Querschnitt ausgebildet und vorzugsweise in radialer und/oder axialer Richtung abweichend von einer Normalen auf die jeweilige Leitungsoberfläche ausgerichtet sind.

5. Vorrichtung nach einem oder mehreren der Ansprüche 1 bis 4, **dadurch gekennzeichnet, dass** die Stabilisierungskammer (14) mit gegenüber der Probenleitung (10) im Sekundärverdünner (8) wesentlich größerem Querschnitt ausgebildet ist, und zusätzlich zu einer Ausströmöffnung (15) zumindest einen Entnahmeanschluss (16) für den Partikelzähler (5) aufweist.

## Claims

1. Device for the determination of the concentration of solid particles in a particle-loaded gas stream, with a pre-diluter (6) mixing a sample flow branched off from the gas stream with an essentially particle-free diluting gas, a heated evaporator (7) downstream in the diluted sample flow, a secondary diluter (8) downstream of evaporator (7) and mixing the sample flow with additional essentially particle-free diluting gas, and a particle counter (5) downstream of the secondary diluter (8), **characterized by**, that the secondary diluter (8) is designed as porous tube diluter and mounted between the outlet of the evaporator (7) and a stabilization chamber (14), from which the sample flow is branched off for the particle counter (5).

2. Device according to Claim 1, **characterized by**, that the secondary diluter (8) is connected with the heated evaporator (7) by a thermal insulated sample line (10).

3. Device according to claim 1 or 2, **characterized by**, that the secondary diluter (8) that is designed as porous tube diluter is provided with a large number, preferably > 1,000 circumference openings (9), preferably having a diameter of < .15 mm, in the sample line (10), to which the additional dilution gas can be supplied, preferably as thermally adjustable cold dilution stream, from a sealed casing space (11) surrounding this section of the sample line (10).

4. Device according to Claim 3, **characterized by**, that the circumference openings (9) are designed tapered with decreasing cross section from the outside toward the inside and preferably in radial and/or axial direction deviating from a normal, aligned toward the respective line surface.

5. Device according to one or more of claims 1 to 4, **characterized by**, that the stabilization chamber (14) is designed with a significantly larger cross section with respect to the sample line (10) in the secondary diluter (8), and is provided with, at least one sampling connection (16) for the particle counter (5) in addition to an exhaust opening (15).

## Revendications

1. Dispositif pour déterminer la concentration de particules solides dans un courant de gaz chargé de particules, comportant un pré-dilueur (6) mélangeant un courant échantillon dérivé du courant de gaz avec un gaz diluant sensiblement exempt de particules, un évaporateur chauffé (7) disposé en aval dans le courant échantillon dilué, un dilueur secondaire (8) disposé en aval de l'évaporateur (7), mélangeant le courant échantillon avec davantage de gaz diluant sensiblement exempt de particules et un compteur de particules (5) disposé en aval du dilueur secondaire (8), **caractérisé en ce que** le dilueur secondaire (8) est réalisé sous la forme d'un « Porous Tube Diluter » et est disposé entre la sortie de l'évaporateur (7) et une chambre de stabilisation (14) de laquelle est dérivé le courant échantillon pour le compteur de particules (5).

2. Dispositif selon la revendication 1, **caractérisé en ce que** le dilueur secondaire (8) est relié à l'évaporateur chauffé (7) par un conduit d'échantillon (10) thermiquement isolé.

3. Dispositif selon l'une des revendications 1 ou 2, **caractérisé en ce que** le dilueur secondaire (8) réalisé sous la forme d'un « Porous Tube Diluter » présente un grand nombre, de préférence > 1000, d'ouvertures périphériques (9), de préférence ayant un diamètre < 0,15mm, dans le conduit d'échantillon (10), ouvertures auxquelles le gaz diluant supplémentaire peut être acheminé, sous la forme d'un courant de dilution froid de préférence apte à être thermostaté, à partir d'un espace d'enveloppe (11) entourant de manière étanche le conduit d'échantillon (10) dans cette région.

4. Dispositif selon la revendication 3, **caractérisé en ce que** les ouvertures périphériques (9) sont réalisées sous une forme conique avec une section transversale diminuant de l'extérieur vers l'intérieur et sont orientées, de préférence, dans une direction radiale et/ou axiale s'écartant d'une normale à la surface respective du conduit.

5. Dispositif selon l'une ou plusieurs des revendications 1 à 4, **caractérisé en ce que** la chambre de stabilisation (14) est formée avec une section transversale sensiblement plus grande que celle du conduit d'échantillon (10) dans le dilueur secondaire (8) et qu'elle présente, en plus d'une ouverture de sortie (15), au moins un raccord de prélèvement (16) pour le compteur de particules (5).
